# EUROPEAN PATENT APPLICATION

(11) **EP 4 645 552 A1**
(43) Date of publication of application: **05.11.2025**
(21) Application number: 24907790.0
(22) Date of filing: 11.11.2024
(51) Int. Cl.: H01M 50/258, H01M 10/04, H01M 50/502

(54) **BATTERY MODULE**

(30) Priority: 21.12.2023 KR 20230188263
(71) Applicant: LG Energy Solution, Ltd., Seoul 07335 (KR)
(72) Inventor: Lee, Seung Jun, Daejeon 34122 (KR); Lee, Joon Hyuk, Daejeon 34122 (KR); Lee, Jong Young, Daejeon 34122 (KR)
(74) Representative: Plasseraud IP
(86) International application number: PCT/KR2024/017740
(87) International publication number: WO 2025/135505

(57) **Abstract**

Disclosed is a battery module including a cell assembly including a plurality of battery cells, a main body frame comprising an inner space, wherein the inner space is configured to accommodate the cell assembly, a busbar frame electrically connected to the cell assembly, and an end plate coupled to one side or another of the main body frame, wherein the main body frame and the end plate are coupled to each other by male-female coupling.

## Description

### [Technical Field]

This application claims the benefit of priority to Korean Patent Application No. 2023-0188263 filed on December 21, 2023, the disclosure of which is incorporated herein by reference in its entirety.

The present invention relates to a battery module, and more particularly to a battery module with improved assembly position precision of each component.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Hybrid or electric vehicles have the advantage that driving force is obtained from a battery pack, fuel efficiency is higher than in vehicles that use only an internal combustion engine, and pollutants are not emitted or reduced.

The battery pack used in hybrid or electric vehicles includes a battery module including a plurality of battery cells, and the capacity and output of the battery module are increased as the plurality of battery cells is connected to each other in series and/or parallel.

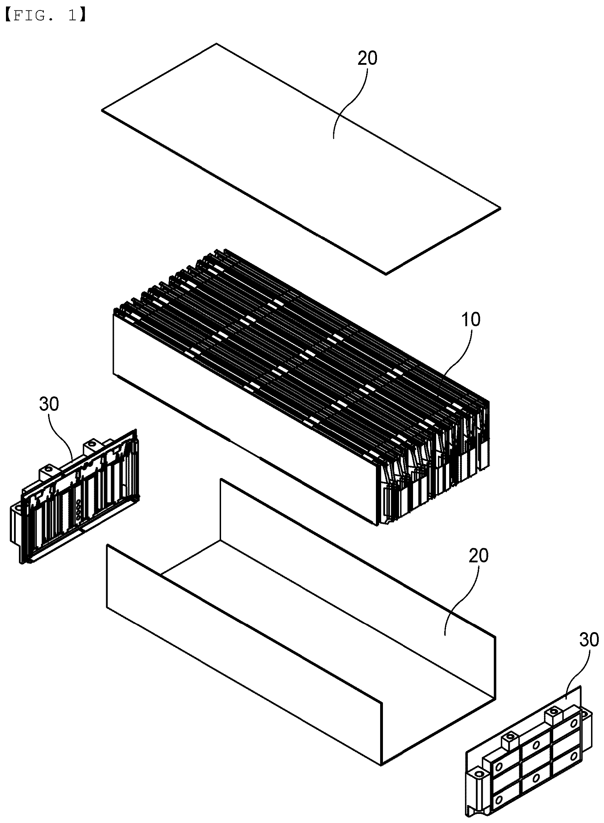

FIG. 1 is an exploded perspective view illustrating a conventional battery module.

Referring to FIG. 1, the conventional battery module includes a frame member 20 configured to accommodate a cell assembly 10 and an end plate 30 coupled thereto.

The frame member 20 and the end plate 30 are assembled to each other in the state in which the posture and position thereof are determined by an assembly jig, and are assembled to each other in the state in which six surfaces thereof are all pressed for precise welding.

At this time, the frame member 20 may be deformed when pressed, since the frame member 20 has a small thickness. In addition, components are assembled to each other in the state in which the posture and position of the components are distorted due to the tolerance of the components or the alignment or deviation of the assembly jig, whereby position precision is reduced.

### (Prior Art Document)

(Patent Document 1) Korean Patent Application Publication No. 10-2023-0064565

### [Disclosure]

### [Technical Problem]

The present invention has been made in view of the above problems, and it is an object of the present invention to provide a battery module configured such that deformation of components is minimized during a component assembly or fastening process and assembly position precision of each component is improved.

### [Technical Solution]

As a technical means for achieving the above object, a battery module according to an embodiment of the present invention includes a cell assembly (100) including a plurality of battery cells, a main body frame (200) comprising an inner space, wherein the inner space is configured to accommodate the cell assembly (100), a busbar frame (300) electrically connected to the cell assembly (100), and an end plate (400) coupled to one side or another of the main body frame (200), wherein the main body frame (200) and the end plate (400) are coupled to each other by male-female coupling.

Also, in the battery module according to the embodiment of the present invention, the end plate (400) may include a first end plate (410) coupled to the one side of the main body frame (200) and a second end plate (420) coupled to the another side of the main body frame (200).

Also, in the battery module according to the embodiment of the present invention, the first end plate (410) may include a 1a end plate (411) located on the one side of the main body frame (200), wherein the 1a end plate (411) include at least one second protrusion (411a) along an edge of the 1a end plate (411), and a 1b end plate (412) coupled to the another side of the 1a end plate (411), wherein the 1b end plate (412) is configured to electrically insulate the cell assembly (100) and the 1a end plate (411) from each other.

Also, in the battery module according to the embodiment of the present invention, the 1a end plate (411) may include a first fastening hole (411c), the 1b end plate (412) may include a first fastening member (412a), and the 1a end plate (411) and the 1b end plate (412) may be coupled to each other by coupling between the first fastening hole (411c) and the first fastening member (412a).

Also, in the battery module according to the embodiment of the present invention, the second end plate (420) may include a 2a end plate (421) located on the another side of the main body frame (200), the 2a end plate (421) including at least one third protrusion (421a) along an edge of the 2a end plate (421), and a 2b end plate (422) coupled to one side of the 2a end plate (421), wherein the 2b end plate (422) is configured to electrically insulate the cell assembly (100) and the 2a end plate (421) from each other.

Also, in the battery module according to the embodiment of the present invention, the 2a end plate (421) may include a second fastening hole (421b), the 2b end plate (422) may include a second fastening member (422a), and the 2a end plate (421) and the 2b end plate (422) may be coupled to each other by coupling between the second fastening hole (421b) and the second fastening member (422a).

Also, in the battery module according to the embodiment of the present invention, the main body frame (200) may include a first main body frame (210) configured to accommodate the cell assembly (100) in an inner space thereof, wherein an upper part and both sides of the first main body frame are open, and a second main body frame (220) seated on an upper end of the first main body frame (210).

Also, in the battery module according to the embodiment of the present invention, one end of the first main body frame (210) may include a first depression (211), wherein a part of the first depression is depressed inward, one end of the second main body frame (220) may include a third depression (221a), wherein a part of the third depression is depressed inward, and the first depression (211) and the third depression (221a) may be coupled to the second protrusion (411a) by male-female coupling.

Also, in the battery module according to the embodiment of the present invention, a central part of one end of the second main body frame (220) may include an extension portion (221)t protruding therefrom, and the extension portion (221) may include the third depression (221a).

Also, in the battery module according to the embodiment of the present invention, the 1a end plate (411) may include one or more of the second protrusion (411a) such that each side of the 1a end plate (411) includes the one or more of the second protrusion (411a), and the 1a end plate (411) may include a seating die (411b), wherein the seating die (411b) is a depressed part of an edge of an upper part of the 1a end plate (411), and wherein the extension portion (331) is seated on the seating die (411b).

Also, in the battery module according to the embodiment of the present invention, another end of the first main body frame (210) may include a second depression (212), wherein a part of the second depression (212) is depressed inward, the another end of the second main body frame (220) may include a fourth depression (222), wherein a part of the fourth depression (222) is depressed inward, and the second depression (212) and the fourth depression (222) may be coupled to the third protrusion (421a) by male-female coupling.

Also, in the battery module according to the embodiment of the present invention, the 2a end plate (421) may include one or more of the third protrusion (421a) such that each side of the 2a end plate (421) includes the one or more of the third protrusion (421a).

Also, in the battery module according to the embodiment of the present invention, an upper end of the first main body frame (210) may include a first protrusion (213), wherein a part of the first protrusion protrudes upward, a side surface of the second main body frame (220) may include a fifth depression (223), wherein a part of the fifth depression is depressed inward, and the first protrusion (213) and the fifth depression (223) may be coupled to each other by male-female coupling.

Also, in the battery module according to the embodiment of the present invention, the busbar frame (300) may include a first busbar frame (310) located on one side of the cell assembly (100) and a second busbar frame (320) located on another side of the cell assembly (100).

Also, in the battery module according to the embodiment of the present invention, the first busbar frame

(310) may include a module terminal (311) protruding to one side, and the 1b end plate (412) may include a terminal hole (412b) configured to allow the module terminal (311) to pass therethrough.

### [Advantageous Effects]

As is apparent from the above description, a battery module according to the present invention has the advantage that a main body frame and an end plate are coupled to each other by male-female coupling, whereby it is possible to easily assemble the main body frame and the end plate.

In addition, the battery module according to the present invention has the merit that, since the main body frame and the end plate are coupled to each other by male-female coupling, the coupling position is correct, whereby it is possible to minimize deformation of the main body frame.

### [Description of Drawings]

FIG. 1 is an exploded perspective view illustrating a conventional battery module.
FIG. 2 is a perspective view illustrating a battery module according to an embodiment of the present invention.
FIG. 3 is an exploded perspective view illustrating the battery module according to the embodiment of the present invention.
FIG. 4 is a perspective view illustrating a main body frame of the battery module according to the embodiment of the present invention.
FIG. 5 is a view illustrating the coupling state of part A shown in FIG. 4.
FIG. 6 is a perspective view illustrating the state in which a first end plate is coupled to the main body frame in the battery module according to an embodiment of the present invention.
FIG. 7 is an exploded perspective view illustrating the first end plate of the battery module according to the embodiment of the present invention.
FIG. 8 is a perspective view illustrating the state before the first end plate is coupled to the main body frame in the battery module according to the embodiment of the present invention.
FIG. 9 is a perspective view of the first end plate shown in FIG. 8 when viewed from the other side.
FIG. 10 is an enlarged view of parts B and C of FIG. 6.
FIG. 11 is a perspective view illustrating the state in which a second end plate is coupled to the main body frame in the battery module according to the embodiment of the present invention.
FIG. 12 is an exploded perspective view illustrating the second end plate of the battery module according to the embodiment of the present invention.
FIG. 13 is a perspective view illustrating the state before the second end plate is coupled to the main body frame in the battery module according to the embodiment of the present invention.
FIG. 14 is a perspective view of the second end plate shown in FIG. 13 when viewed from the other side.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a battery module according to the present invention will be described.

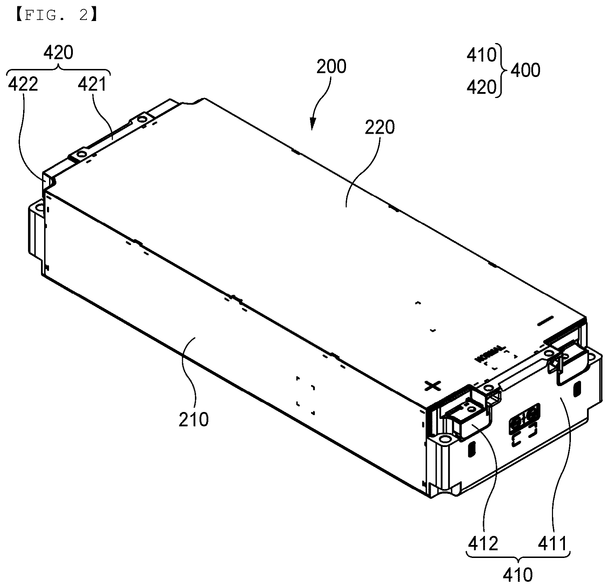

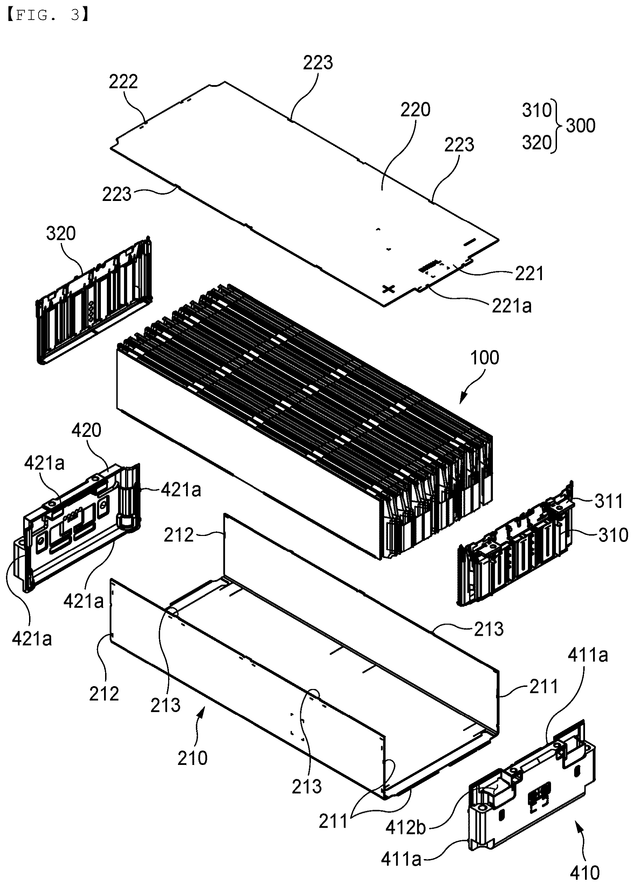

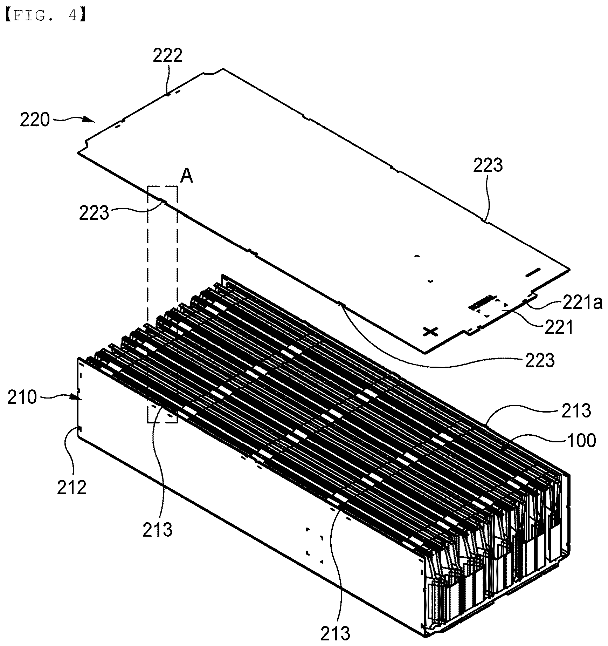

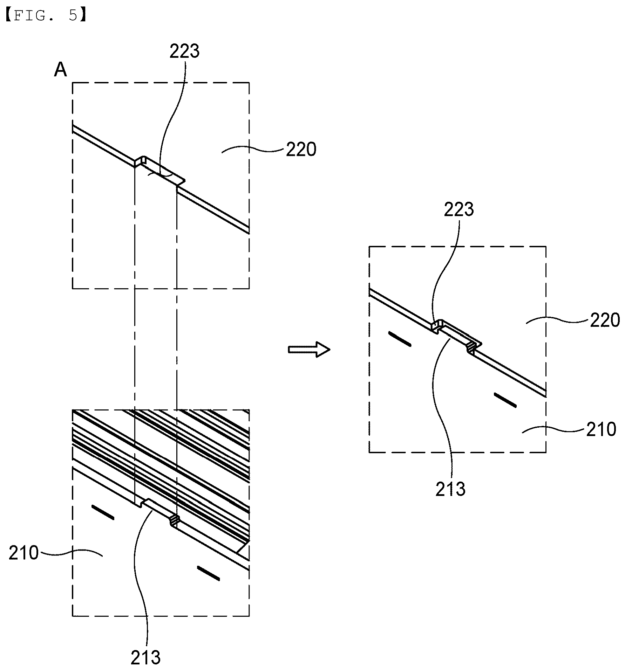

FIG. 2 is a perspective view illustrating a battery module according to an embodiment of the present invention, and FIG. 3 is an exploded perspective view illustrating the battery module according to the embodiment of the present invention. In addition, FIG. 4 is a perspective view illustrating a main body frame of the battery module according to the embodiment of the present invention, and FIG. 5 is a view illustrating the coupling state of part A shown in FIG. 4.

Referring to FIGs. 2 to 5, the battery module according to the present invention includes a cell assembly 100, a main body frame 200, a busbar frame 300, and an end plate 400.

First, the cell assembly 100 may include a plurality of battery cells. The battery cell may be a pouch-shaped secondary battery including an electrode assembly, an electrode lead, and a battery case.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The battery case, which accommodates the electrode assembly, is made of a laminate sheet including an outer covering layer, a metal layer, and an inner covering layer, and has a receiving portion.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermallybonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the main body frame 200 may include a first main body frame 210 and a second main body frame 220. The first main body frame 210 may be a frame in which the cell assembly 100 is accommodated in an inner space thereof and an upper part (a 12 o'clock direction in FIG. 3) and both sides (4 and 10 o'clock directions in FIG. 3) are open. That is, the first main body frame 210 may be a U-shaped frame (a U-type frame).

A first depression 211 and a second depression 212 may be formed in one end and the other end of the first main body frame 210, respectively, such that a part of each of the first depression and the second depression is depressed inward, which will be described in detail later.

In addition, a first protrusion 213 may be formed on an upper end of the first main body frame 210 such that a part of the first protrusion protrudes upward. For example, the first protrusion 213 may be formed on a predetermined area of the edge of an upper end of each of a pair of side surfaces supporting both side surfaces of the cell assembly 100 such that a part of the first protrusion protrudes upward.

Here, it is preferable for the first protrusion 213 to be provided in plural, and it is more preferable for the first protrusion to be provided at the upper end of each side surface in plural.

In addition, the second main body frame 220 may be a frame that is seated on the upper end of the first main body frame 210. That is, the second main body frame 220 may be an upper plate that is seated on the upper end of the first main body frame 210, which is a U-shaped frame, and accordingly, the cell assembly 100 may be accommodated in an inner space of the main body frame 200.

A third depression 221a and a fourth depression 222 may be formed in one end and the other end of the second main body frame 220, respectively, such that a part of each of the third depression and the fourth depression is depressed inward. The third depression 221a may be formed in an extension portion 221 formed as the result of a central part of one end of the second main body frame 200 (a 4 o'clock direction in FIG. 3) protruding, and the third depression 221a and the fourth depression 222 will be described in detail later.

In addition, a fifth depression 223 may be formed in a side surface of the second main body frame 220 such that a part of the fifth depression is depressed inward. The fifth depression 223 may be coupled to the first protrusion 213 by male-female coupling. Here, the male-female coupling may refer to coupling (connection) achieved as the result of the first protrusion 213 being inserted into the fifth depression 223.

The fifth depression 223 may be formed so as to correspond in size and position to the first protrusion 213 such that the first protrusion 213 can be inserted into the fifth depression. For example, in consideration of construction errors, manufacturing errors, etc., it is preferable to set the fifth depression 223 such that the size of the fifth depression is greater than the size of the first protrusion 213 considering an error range; however, the fifth depression may be set such that movement of the first main body frame 210 and the second main body frame 220 in one and the other directions (4 and 10 o'clock directions in FIG. 2) is restricted.

Movement of the first main body frame 210 and the second main body frame 220 in one and the other directions may be prevented when assembled.

The busbar frame 300 may be electrically connected to the cell assembly 100. The busbar frame 300, which connects a plurality of battery cells included in the cell assembly 100 to each other in series and/or parallel, may be made of a metal material having excellent electrical conductivity, and the width and thickness of the busbar frame may be appropriately selected based on the structure of the battery module.

In addition, various methods may be used to electrically connect the busbar frame 300 and the cell assembly 100 to each other.

The busbar frame 300 may include a first busbar frame 310 located on one side of the cell assembly 100 (a 4 o'clock direction in FIG. 3) and a second busbar frame 320 located on the other side of the cell assembly 100 (a 10 o'clock direction in FIG. 3).

The first busbar frame 310 may be provided with a module terminal 311 protruding to one side. The module terminal 311 may connect the battery module to another external component, such as another battery module or a pack terminal. The module terminal 311 may be a terminal through which charging and discharging current flows to the cell assembly 100, and the module terminal 311 may be provided with a positive electrode terminal and a negative electrode terminal.

The end plate 400 may be coupled to both sides of the main body frame 200.

The end plate 400 may include a first end plate 410 coupled to one side of the main body frame 200 and a second end plate 420 coupled to the other side of the main body frame 200.

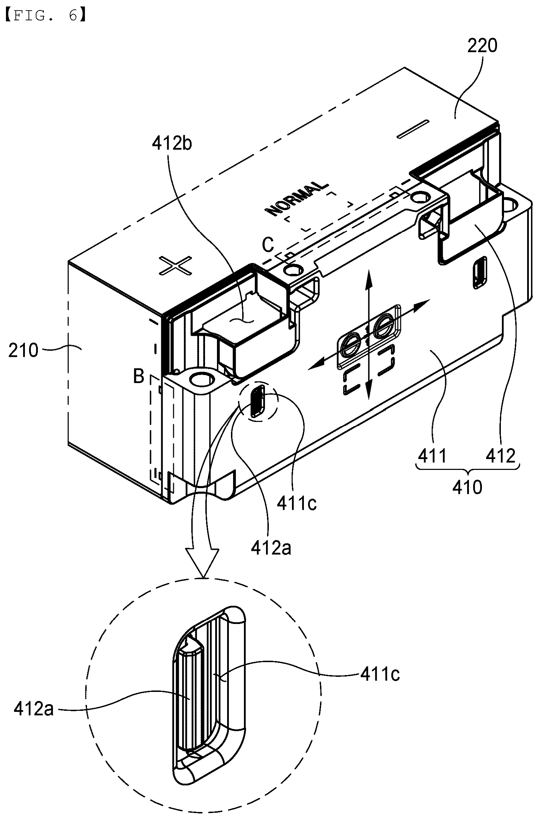

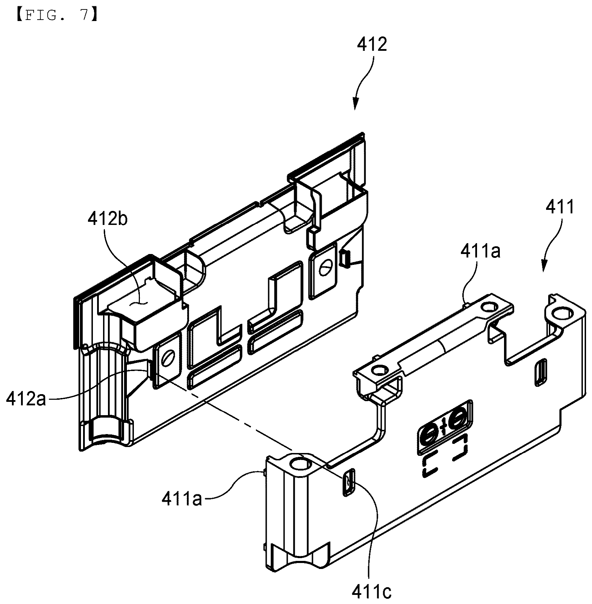

FIG. 6 is a perspective view illustrating the state in which the first end plate is coupled to the main body frame in the battery module according to an embodiment of the present invention, and FIG. 7 is an exploded perspective view illustrating the first end plate of the battery module according to the embodiment of the present invention.

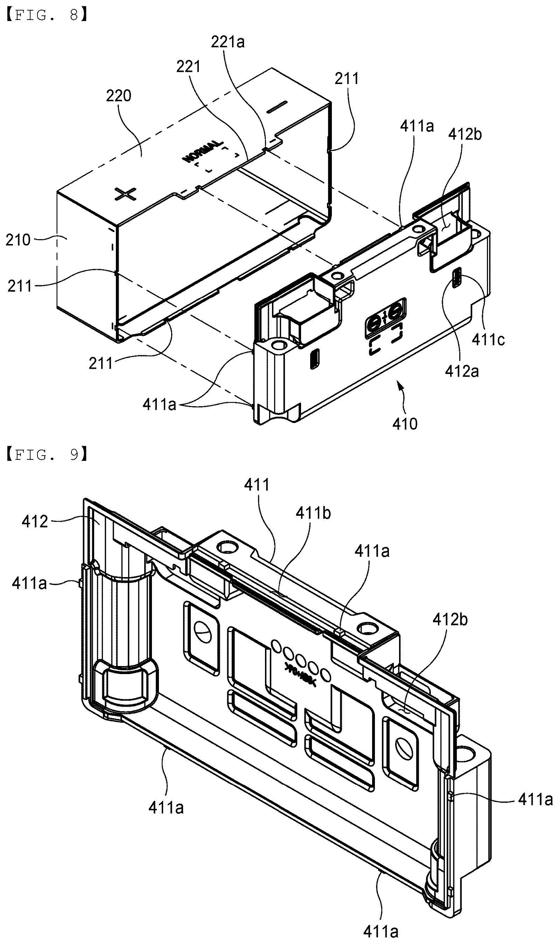

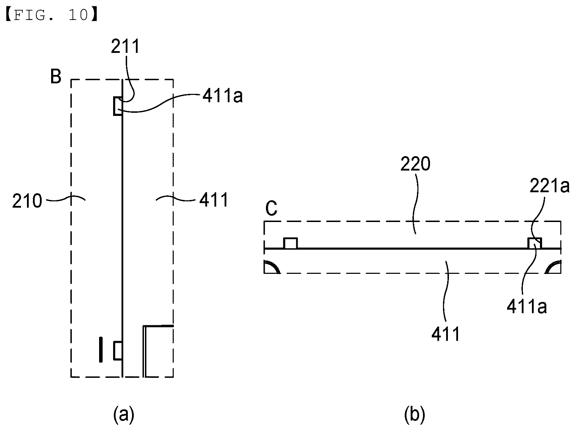

In addition, FIG. 8 is a perspective view illustrating the state before the first end plate is coupled to the main body frame in the battery module according to the embodiment of the present invention, FIG. 9 is a perspective view of the first end plate shown in FIG. 8 when viewed from the other side, and FIG. 10 is an enlarged view of parts B and C of FIG. 6.

Referring to FIGs. 2 to 10, the first end plate 410 may include a 1a end plate 411 and a 1b end plate 412. The 1a end plate 411 may be located on one side of the main body frame 200 (a 4 o'clock direction in FIG. 2).

In addition, the 1a end plate 411 may be provided along the edge thereof with at least one second protrusion 411a, and the at least one second protrusion 411a may be formed on each side of the 1a end plate 411. For example, at least one second protrusion 411a, preferably two or more second protrusions 411a, may be formed on each of four sides of the 1a end plate 411.

The second protrusion 411a may be coupled to the first depression 211 formed in the first main body frame 210 and the third depression 221a formed in the second main body frame 220 by male-female coupling. For example, at least one first depression 211 may be formed at one end of each of three plates constituting the first main body frame 210 (each of three sides), and at least one third depression 221a may be formed at one end of the second main body frame 220 (one side) .

The first depression 211 and the third depression 221a may be provided so as to correspond in position and size to the second protrusion 411a. As described above, in consideration of construction errors, manufacturing errors, etc., it is preferable to set the first depression 211 and the third depression 221a such that the size of each of the first depression and the third depression is greater than the size of the second protrusion 411a considering an error range.

The 1a end plate 411 may be provided in an upper end thereof with a seating die 411b partially depressed such that the extension portion 221 formed as the result of the central part of one end of the second main body frame 200 protruding is seated thereon.

The seating die 411b may be partially depressed so as to correspond in shape and thickness to the extension portion 221, and the seating die 411b may also be provided with a second protrusion 411a, which may be coupled to the third depression 221a formed in the extension portion 221 by male-female coupling.

As a result, the extension part 221 is seated on the seating die 411b, and the second protrusion 411a and the third depression 221a are coupled to each other by male-female coupling, whereby the 1a end plate 411 and the second main body frame 220 may be more stably connected (coupled) to each other.

Meanwhile, a first fastening hole 411c may be formed in the 1a end plate 411, and at least one first fastening hole 411c may be formed in the 1a end plate 411 in a slit shape. The first fastening hole 411c may be formed for fastening (coupling) with the 1b end plate 412.

The 1b end plate 412 may be located on the other side of the 1a end plate 411, i.e., between the 1a end plate 411 and the first busbar frame 310, and may be coupled to the 1a end plate 411 such that the cell assembly 100 and the 1a end plate 411 are electrically insulated from each other. For example, the 1b end plate 412 may be made of an electrically insulating material, and the material is not particularly limited as long as the material is an insulating and heat-resistant material.

The 1b end plate 412 may be provided with a first fastening member 412a. The first fastening member 412a may be coupled to the first fastening hole 411c of the 1a end plate 411, and the 1a end plate 411 and the 1b end plate 412 may be coupled to each other by coupling between the first fastening member 412a and the first fastening hole 411c.

For example, the first fastening member 412a may partially protrude from one surface of the 1b end plate 412 toward one side, and may be provided in the form of a hook with the end bent at a predetermined angle. Here, when the first fastening member 412a is inserted into the first fastening hole 411c, the first fastening member is elastically inserted into the first fastening hole at a predetermined angle.

At least one first fastening member 412a may be provided on one surface of the 1b end plate 412.

In addition, the 1b end plate 412 may be provided with a terminal hole 412b, through which the module terminal 311 of the first busbar frame 310 passes. The terminal hole 412b may be configured to expose the module terminal 311 to the outside, and accordingly, the module terminal 311 may be exposed to the outside through the terminal hole 412b and electrically connected to other external components.

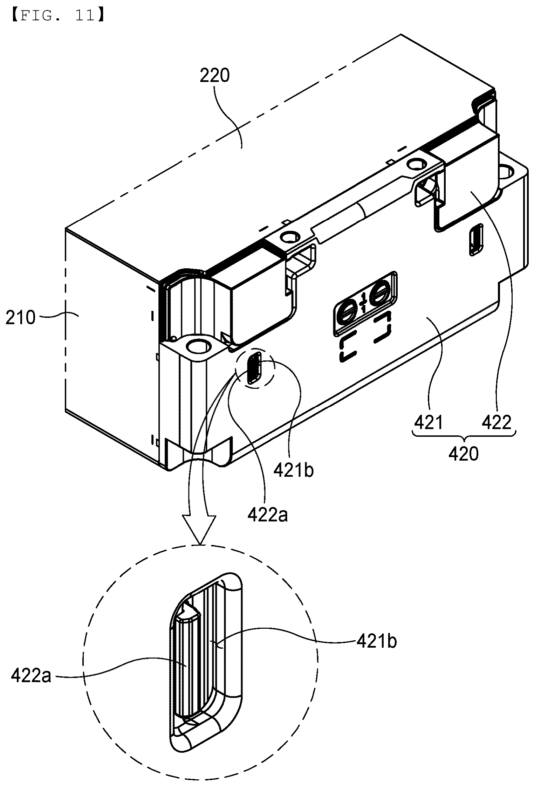

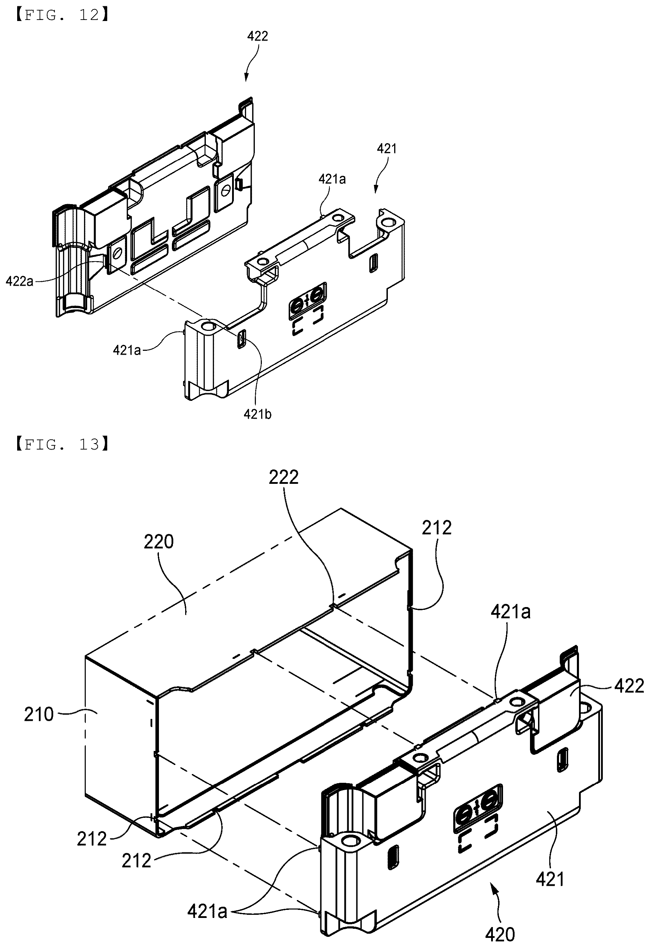

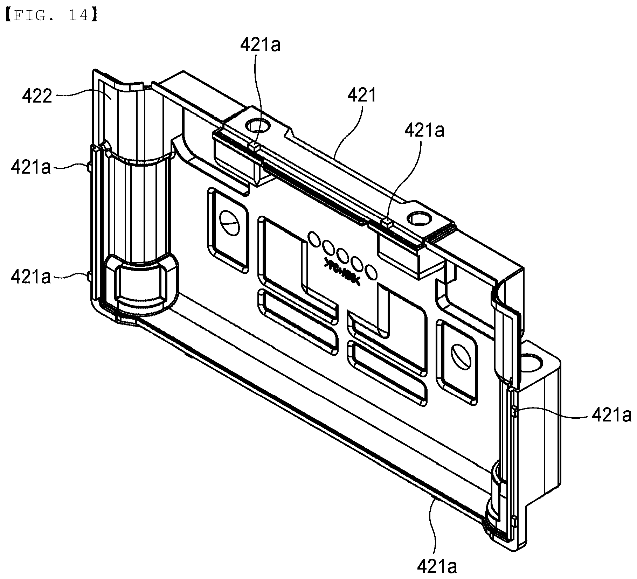

FIG. 11 is a perspective view illustrating the state in which the second end plate is coupled to the main body frame in the battery module according to the embodiment of the present invention, and FIG. 12 is an exploded perspective view illustrating the second end plate of the battery module according to the embodiment of the present invention. In addition, FIG. 13 is a perspective view illustrating the state before the second end plate is coupled to the main body frame in the battery module according to the embodiment of the present invention, and FIG. 14 is a perspective view of the second end plate shown in FIG. 13 when viewed from the other side.

Referring to FIGs. 2 to 5 and 11 to 15, the second end plate 420 may include a 2a end plate 421 and a 2b end plate 422. The 2a end plate 421 may be located on the other side of the main body frame 200(a 10 o'clock direction in FIG. 2).

In addition, the 2a end plate 421 may be provided along the edge thereof with at least one third protrusion 421a, and at least one third protrusion 421a may be formed on each side of the 2a end plate 421. For example, at least one (for example, two) third protrusion 421a may be formed on each of four sides of the 2a end plate 421.

The third protrusion 421a may be coupled to the second depression 212 formed in the first main body frame 210 and the fourth depression 222 formed in the second main body frame 220 by male-female coupling. For example, at least one second depression 212 may be formed at the other end of each of three plates constituting the first main body frame 210 (each of three sides), and at least one fourth depression 222 may be formed at the other end of the second main body frame 220 (one side).

The second depression 212 and the fourth depression 222 may be provided so as to correspond in position and size to the third protrusion 421a. As described above, in consideration of construction errors, manufacturing errors, etc., it is preferable to set the second depression 212 and the fourth depression 222 such that the size of each of the first depression and the third depression is greater than the size of the third protrusion 421a considering an error range.

The 2a end plate 421 may be provided in an upper end thereof with a seating die (not shown) partially depressed such that the other end of the second main body frame 200 is seated thereon, and the seating die (not shown) may also be provided with a third protrusion 421a, which may be coupled to the fourth depression 222 by male-female coupling.

Meanwhile, a second fastening hole 421b may be formed in the 2a end plate 421, and at least one second fastening hole 421b may be formed in the 2a end plate 421 in a slit shape. The second fastening hole 421b may be formed for fastening (coupling) with the 2b end plate 422.

The 2b end plate 422 may be disposed on one side of the 2a end plate 421, i.e., between the 2a end plate 421 and the second busbar frame 320, and may be coupled to the 2a end plate 421 such that the cell assembly 100 and the 2a end plate 421 are electrically insulated from each other. For example, the 2b end plate 422 may be made of the same material as the 1b end plate 412.

The 2b end plate 422 may be provided with a second fastening member 422a. The second fastening member 422a may be coupled to the second fastening hole 421b of the 2a end plate 421, and the 2a end plate 421 and the 2b end plate 422 may be coupled to each other by coupling between the second fastening member 422a and the second fastening hole 421b.

For example, the second fastening member 422a may partially protrude from the other surface of the 2b end plate 422 toward the other side, and may be provided in the form of a hook with the end bent at a predetermined angle. Here, when the second fastening member 422a is inserted into the second fastening hole 421b, the second fastening member is elastically inserted into the second fastening hole at a predetermined angle.

At least one second fastening member 422a may be provided on the other surface of the 2b end plate 422.

As described above, in the battery module according to the present invention, the first end plate 410 and the second end plate 420 may be coupled respectively to one side and the other side of the main body frame 200 by male-female coupling. Accordingly, it is possible to minimize upwarddownward movement of the first end plate 410 and the second end plate 420 relative to the first main body frame 210 (6 and 12 o'clock directions in FIG. 2) and leftward-rightward movement of the first end plate and the second end plate relative to the second main body frame 220 (1 and 7 o'clock directions in FIG. 2). Of course, when the main body frame 200 and the end plate 400 are assembled or pressed, deformation of the components is minimized, whereby it is possible to improve assembly position precision.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

100: Cell assembly
200: Main body frame
210: First main body frame
211: First depression 212: Second depression
213: First protrusion
220: Second main body frame
221: Extension portion 221a: Third depression
222: Fourth depression
223: Fifth depression
300: Busbar frame
310: First busbar frame 311: Module terminal
320: Second busbar frame
400: End plate
410: First end plate
411: 1a end plate
411a: Second protrusion 411b: Seating die
411c: First fastening hole
412: 1b end plate
412a: First fastening member 412b: Terminal hole
420: Second end plate
421: 2a end plate
421a: Third protrusion 421b: Second fastening hole
422: 2b end plate 422a: Second fastening member

## Claims

1. A battery module comprising:
a cell assembly comprising a plurality of battery cells;
a main body frame comprising an inner space, wherein the inner space is configured to accommodate the cell assembly;
a busbar frame electrically connected to the cell assembly; and
an end plate coupled to one side or another of the main body frame, wherein
the main body frame and the end plate are coupled to each other by male-female coupling.

2. The battery module according to claim 1, wherein the end plate comprises:
a first end plate coupled to the one side of the main body frame; and
a second end plate coupled to the another side of the main body frame.

3. The battery module according to claim 2, wherein the first end plate comprises:
a 1a end plate located on the one side of the main body frame, wherein the 1a end plate comprises at least one second protrusion along an edge of the 1a end plate; and
a 1b end plate coupled to another side of the 1a end plate, wherein the 1b end plate is configured to electrically insulate the cell assembly and the 1a end plate from each other.

4. The battery module according to claim 3, wherein the 1a end plate comprises a first fastening hole , the 1b end plate comprises a first fastening member, and the 1a end plate and the 1b end plate are coupled to each other by coupling between the first fastening hole and the first fastening member.

5. The battery module according to claim 3, wherein the second end plate comprises:
a 2a end plate located on the another side of the main body frame, the 2a end plate comprising at least one third protrusion along an edge of the 2a end plate; and
a 2b end plate coupled to one side of the 2a end plate, wherein the 2b end plate is configured to electrically insulate the cell assembly and the 2a end plate from each other.

6. The battery module according to claim 5, wherein the 2a end plate comprises a second fastening hole, the 2b end plate comprises a second fastening member, and the 2a end plate and the 2b end plate are coupled to each other by coupling between the second fastening hole and the second fastening member.

7. The battery module according to claim 5, wherein the main body frame comprises:
a first main body frame configured to accommodate the cell assembly in an inner space thereof, wherein an upper part and both sides of the first main body frame are open; and
a second main body frame seated on an upper end of the first main body frame.

8. The battery module according to claim 7, wherein
one end of the first main body frame comprises a first depression, wherein a part of the first depression is depressed inward,
one end of the second main body frame comprises a third depression, wherein a part of the third depression is depressed inward, and
the first depression and the third depression are coupled to the second protrusion by male-female coupling.

9. The battery module according to claim 8, wherein
a central part of one end of the second main body frame comprises an extension portion protruding therefrom, and
the extension portion comprises the third depression.

10. The battery module according to claim 9, wherein
the 1a end plate comprises one or more of the second protrusion such that each side of the 1a end plate comprises the one or more of the second protrusion, and
the 1a end plate comprises a seating die, wherein the seating die is a depressed part of an edge of an upper part of the 1a end plate, and wherein the extension portion is seated on the seating die.

11. The battery module according to claim 7, wherein
another end of the first main body frame comprises a second depression, wherein a part of the second depression is depressed inward,
the another end of the first main body frame comprises a fourth depression, wherein a part of the fourth depression is depressed inward, and
the second depression and the fourth depression are coupled to the third protrusion by male-female coupling.

12. The battery module according to claim 11, wherein the 2a end plate comprises one or more of the third protrusion such that each side of the 2a end plate comprises the one or more of the third protrusion.

13. The battery module according to claim 7, wherein
an upper end of the first main body frame comprises a first protrusion, wherein a part of the first protrusion protrudes upward,
a side surface of the second main body frame comprises a fifth depression, wherein a part of the fifth depression is depressed inward, and
the first protrusion and the fifth depression are coupled to each other by male-female coupling.

14. The battery module according to claim 2, wherein the busbar frame comprises:
a first busbar frame located on one side of the cell assembly; and
a second busbar frame located on another side of the cell assembly.

15. The battery module according to claim 11, wherein
the first busbar frame comprises a module terminal protruding to one side, and
the 1b end plate comprises a terminal hole configured to allow the module terminal to pass therethrough.
